# EUROPEAN PATENT APPLICATION

(11) **EP 2 631 774 A1**
(43) Date of publication of application: **28.08.2013**
(21) Application number: 13000718.0
(22) Date of filing: 12.02.2013
(51) Int. Cl.: G06F 3/0488, G06F 1/16, G06F 3/0482

(54) **Navigation On A Portable Electronic Device**

(30) Priority: 21.02.2012 US 201213401563
(71) Applicant: SAP AG, 69190 Walldorf (DE)
(72) Inventor: Linge, Mario, 69190 Walldorf (DE)
(74) Representative: Müller-Boré & Partner Patentanwälte

(57) **Abstract**

A portable electronic device includes a touch-sensitive display. In embodiments, initial touch zones are enabled on the left- and right-hand sides of the display. A person grasping the device with one hand may navigate using their thumb by making gestures in the touch zones. For example, one such gesture may select a touch zone as the default. A selection menu may then be displayed in the region of the touch zone. Suitable gestures (e.g. using the thumb) can manipulate the selection menu.

## Description

### BACKGROUND

Unless otherwise indicated herein, the approaches described in this section are not prior art to the claims in this application and are not admitted to be prior art by inclusion in this section.

Conventional portable electronic devices are becoming common. A user typically holds the device in the palm of their hand. While the one hand holds the device, the other hand is used for navigation. For example, to browse through data or to scroll through a document, the user must hold the conventional portable electronic device with one hand, and drag/pinch the touchscreen display to manipulate the displayed page using the fingers of the other hand.

### SUMMARY

In one general aspect, a computer-implemented method in a portable electronic device having a touch-sensitive display is provided. The method may comprise: detecting a first tap gesture occurring in a first touch zone that is located on a left side of the display or a right side of the display; responsive to detecting the first tap gesture, displaying a first selection menu comprising a first plurality of displayed menu buttons arranged along a curved path that is defined proximate the first touch zone, the menu buttons having corresponding menu item touch zones on the display; and detecting an event, wherein: if the event is a second tap gesture occurring in one of the menu item touch zones, then performing an action associated with the menu button that corresponds to the menu item touch zone; and if the event is a second tap gesture occurring in the first touch zone, then hiding the first selection menu.

In other words, at least one touch zone is enabled for detection of a tap gesture using a thumb and/or anther finger. A touch zone may be enabled on a left side of the display. Another touch zone may be enabled on a right side of the display so that when a user grasps the portable electronic device with his left hand or with their right hand, respectively, their thumb can touch one of the touch zones.

Hence, advantageously a portable electronic device can be held with one hand, wherein while holding the device on one side of the device, the thumb of the holding hand is still moveable, and can rotate about its joint over a portion of the touchscreen display. In other words, the selection menu is displayed and/or activated in the region (e.g. the first touch zone) of the display where a user's thumb and/or another finger rests on the display.

The claimed method thus contemplates a user interface built around a specific portion of the display for navigation with the thumb (or another finger), allowing the user to hold the device and navigate with one hand.

Further, by arranging the menu buttons along a curved or arcuate path allows the user to make selections with their thumb while grasping the portable electronic device and thus requiring only one hand to both hold the device and navigate a user interface in an easy and efficient manner.

Hence, a continued man-machine interaction with the touch-sensitive display of the portable electronic device is achieved, wherein the user is not required to use more than one hand. This also achieves further technical effects on the easy and efficient handling and/or operability of the portable electronic device. In other words, the touch zone on the display is serving a technical purpose (i.e. usability, handling, and/or operability) and not merely displayed only for sake of viewing, but for enabling a continued man-machine interaction.

In another general aspect, a portable electronic device is provided. The device may comprise: a processor; a data store; and a touch-sensitive display, the data store having stored thereon computer executable program code which, when executed by the processor, causes the processor to: detect a first tap gesture occurring in a first touch zone that is located on a left side of the display or a right side of the display; responsive to detecting the first tap gesture, display a first selection menu comprising a first plurality of displayed menu buttons arranged along a curved path that is defined proximate the first touch zone, the menu buttons having corresponding menu item touch zones on the display; and detect an event, wherein: if the event is a second tap gesture occurring in one of the menu item touch zones, then perform an action associated with the menu button that corresponds to the menu item touch zone; and if the event is a second tap gesture occurring in the first touch zone, then hide the first selection menu.

In another general aspect there is provided a non-transitory computer readable storage medium comprising computer readable instructions, which when loaded and run in a computer system and/or computer network system, cause the computer system and/or the computer network system to perform a method as described.

The subject matter described in this specification can be implemented as a method or as a system or using computer program products, tangibly embodied in information carriers, such as a CD-ROM, a DVD-ROM, a semiconductor memory, signal and/or data stream, and a hard disk. Such computer program products may cause a data processing apparatus to conduct one or more operations described in this specification.

In addition, the subject matter described in this specification can also be implemented as a system including a processor and a memory coupled to the processor. The memory may encode one or more programs that cause the processor to perform one or more of the method acts described in this specification. Further the subject matter described in this specification can be implemented using various MRI machines.

Details of one or more implementations are set forth in the accompanying exemplary drawings and exemplary description below. Other features will be apparent from the description and drawings, and from the claims.

### BRIEF DESCRIPTION OF THE DRAWINGS

Fig. 1 illustrates a usage scenario in accordance with the present disclosure.

Fig. 2 is a generalized schematic diagram of a portable electronic device in accordance with the present disclosure.

Fig. 3 illustrates an example of initial touch zones.

Fig. 3A illustrates an example of a more generalize form for the initial touch zones shown in Fig. 3.

Fig. 3B illustrates an example of graphical elements that may be used to indicate the presence of the initial touch zones of Fig. 3.

Fig. 3C shows an example of a default touch zone, selected from the initial touch zones.

Fig. 4 shows an example of a selection menu.

Fig. 4A shows an example of menu item touch zones.

Fig. 4B shows and example of icons for the menu buttons.

Fig. 5 is a generalized flow chart for processing the touch zones and the selection menu.

Fig. 6 illustrates an example of a dynamic selection menu.

Fig. 7 shows an example of a selection menu having an arbitrary arcuate shape.

Fig. 8 shows an example of a display of sub-menus.

Fig. 9 illustrates that additional sub-menus may be provided.

### DETAILED DESCRIPTION

In the following description, for purposes of explanation, numerous examples and specific details are set forth in order to provide a thorough understanding of the present disclosure. It will be evident, however, to one skilled in the art that the present disclosure as defined by the claims may include some or all of the features in these examples alone or in combination with other features described below, and may further include modifications and equivalents of the features and concepts described herein.

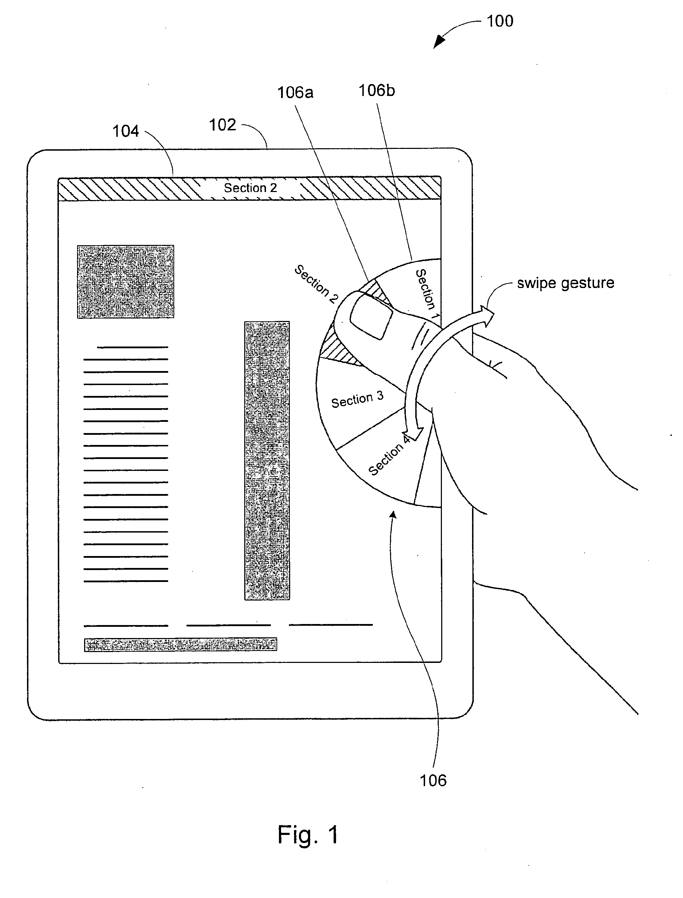

Fig. 1 shows an illustrative example of a portable electronic device 100 in accordance with embodiments of the present disclosure. The portable electronic device 100 may comprise a shell (or frame) 102 which houses the electronics (not shown), and a touch-sensitive display 104. The portable electronic device may include buttons, switches, or other such controls (not shown) for functions such as ON/OFF control, volume control, and so on. In some embodiments, a user may grasp the portable electronic device 100 with their hand in the manner shown in Fig. 1. As will be explained below, a selection menu 106 may be displayed (activated) in the region of the display 104 where the user's thumb rests on the display, although it will be appreciated that activation of the selection menu may also occur by touching with a finger. However as will become clear in the discussions which follow, embodiments of the present disclosure are suited for thumb-based gestures.

Fig. 1 shows the display 104 presenting a display of content (e.g., text and/or image from a document, a web page, and so on). In some embodiments, the selection menu 106 may occlude the content that is displayed in the same area on the display 104. In some embodiments, the selection menu 106 may be opaque, and in other embodiments the selection mention may be partially transparent.

In some embodiments, the user may move their thumb up and down as indicated by the arrow to select from among a number of menu buttons (e.g., 106a, 106b). The user may select a menu buttons (e.g., 106a), for example, a tap gesture using the thumb. The portable electronic device 100 may respond to the tap gesture event, for example, by presenting the content associated with the selected menu button 106a.

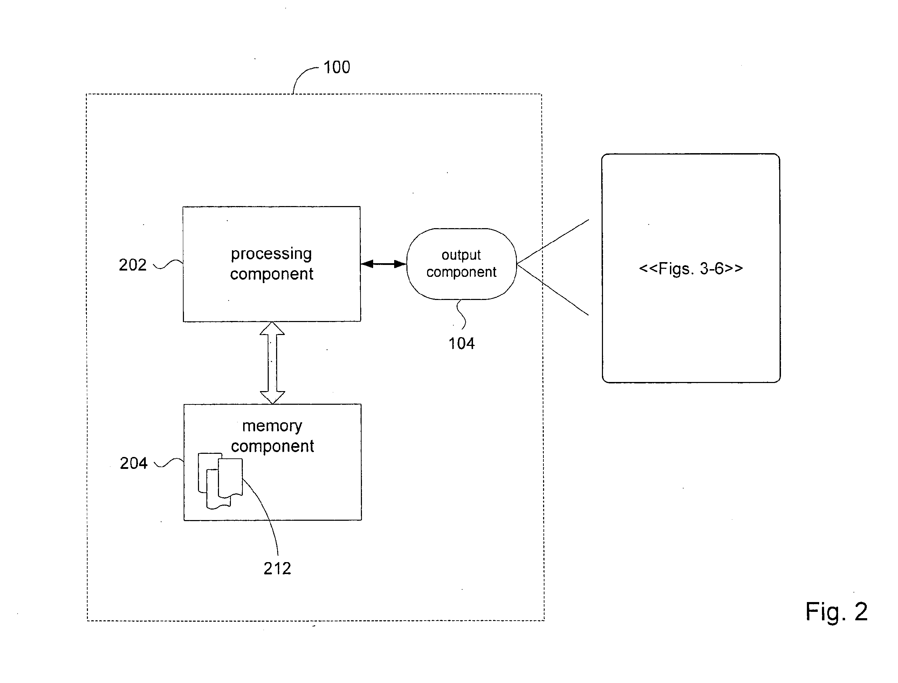

Referring to Fig. 2, the portable electronic device 100 may comprise a processing component 202, a memory 204, and the touch-sensitive display 104. The memory 204 may store program code 212 which may be executed by the processor component 202 to cause the computer to perform any one or more of the processes and methods described herein, and to produce the displays depicted in the figures shown and described below. For example, the program code 212 may represent an application such as a web browser or a documents reader, and so on. The memory may comprise one or more non-transitory computer-readable media to store the program code, including, for example, a Flash drive, and solid state Random Access Memory (RAM) or Read Only Memory (ROM) storage units.

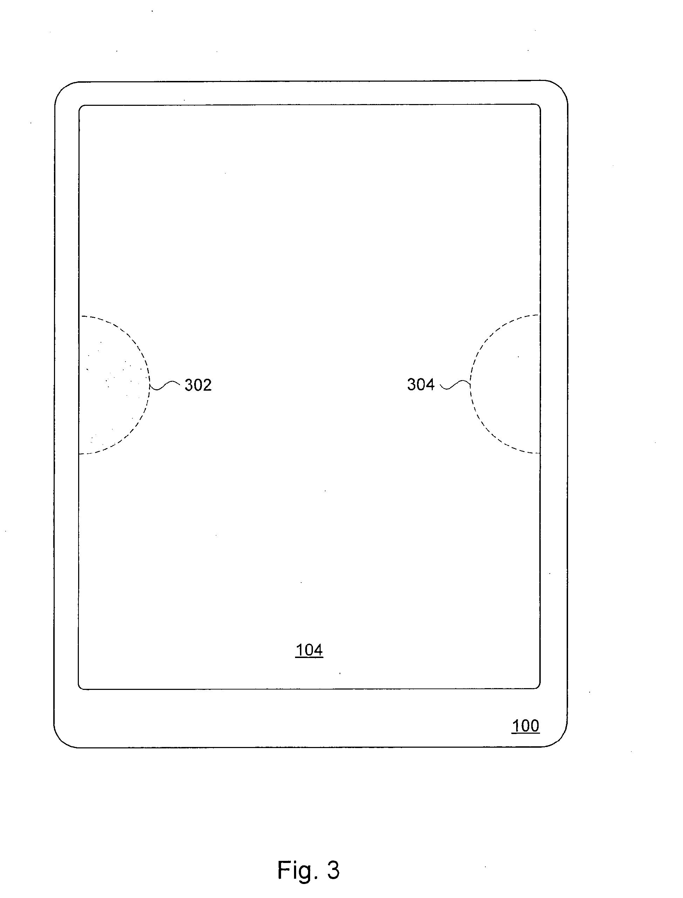

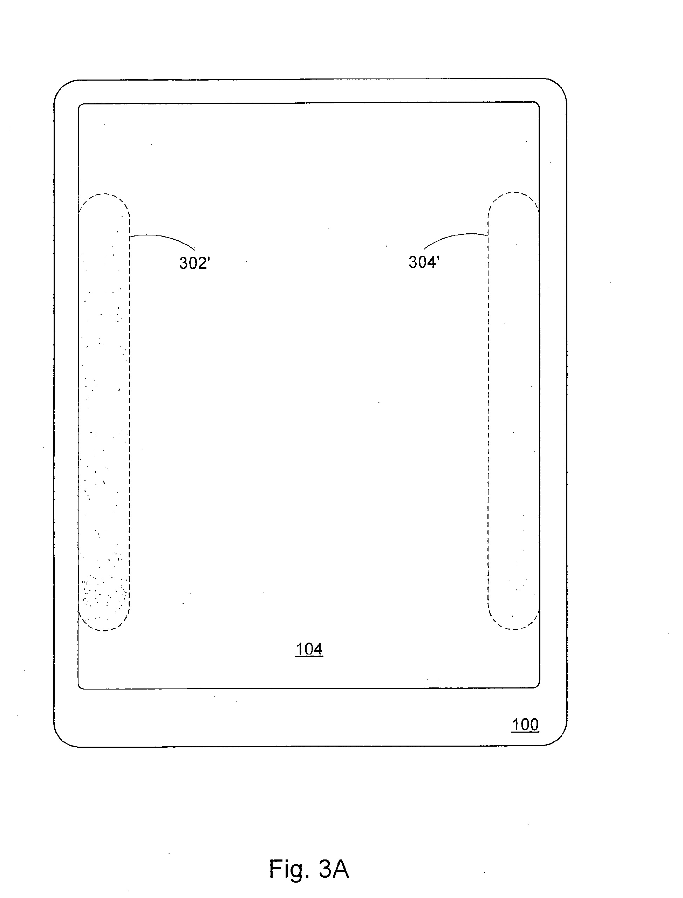

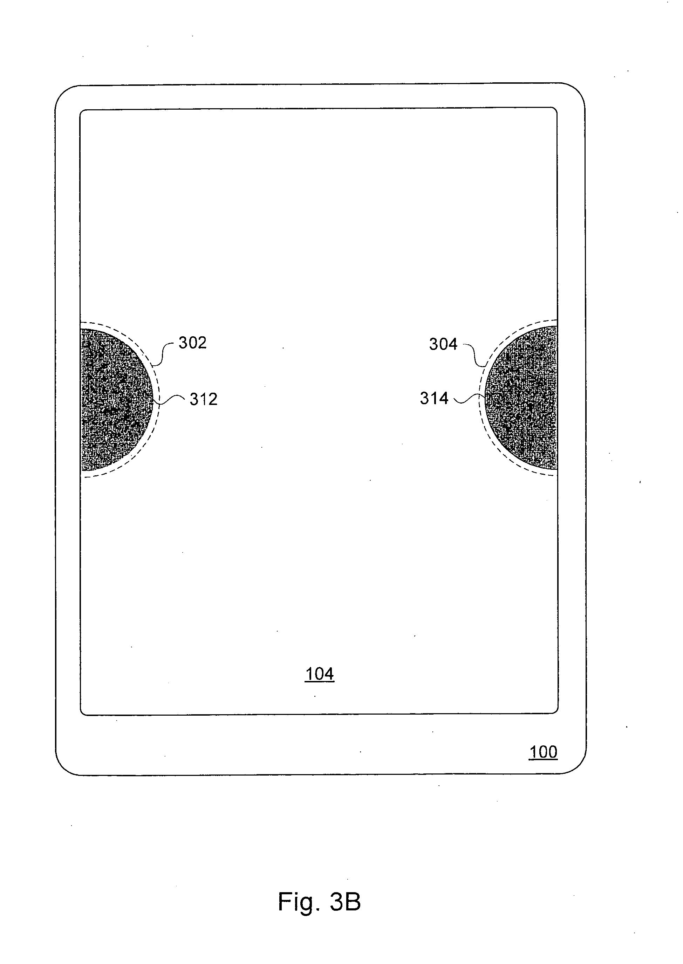

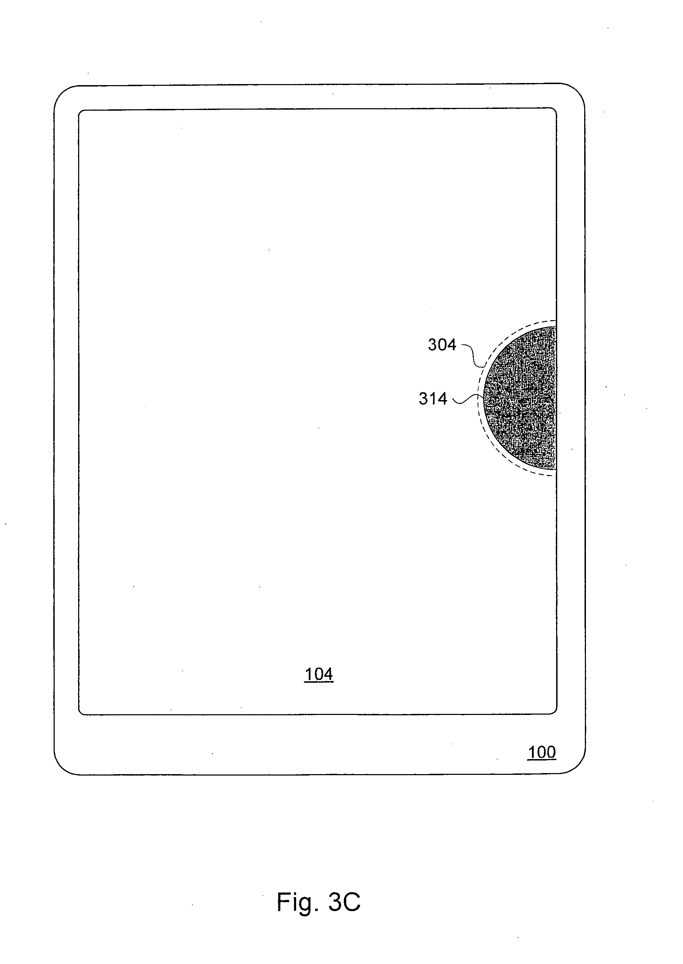

Referring to Fig. 3, the touch-sensitive display 104 may have areas referred to herein as "touch zones", which can be enabled for detection of a tap gesture. In embodiments, an application (e.g., 212, Fig. 2) executing on the portable electronic device 100 may enable "touch zones" for thumb-based navigation. A touch zone refers to an area on the touch-sensitive display 104 that can generate an event when a user makes a tap gesture on the display in the touch zone. As will be explained below, the application may then react to the event, for example, by displaying new content. A touch zone is "enabled" when the processor component 202 (Fig. 2) is programmed to generate an event when a tap gesture is made in the touch zone. A "tap gesture," for example, may be a single tap by a thumb or a finger, or a multiple tap such as a double tap. As another example, a tap gesture may be a single tap using two fingers, or a multiple tap using two fingers.

In some embodiments, two touch zones are enabled for detection of a tap gesture using the thumb. Accordingly, a touch zone 302 may be enabled on a left side of the display 104 and another touch zone 304 may be enabled on a right side of the display so that when a user grasps the portable electronic device 100 with their left hand or with their right hand (as shown in Fig. 1, for example) their thumb can touch one of the touch zones.

Fig. 3 shows an embodiment using predetermined locations for the touch zones 302 and 304. The user is allowed to select from among only the predetermined locations, namely the left-side touch zone 302 or the right-side touch zone 304. In other embodiments, the initial left-side and right-side touch zones may be arbitrary so that the user is not limited to specific locations. Fig. 3A, for example, shows touch zones 302' and 304' that are enabled along longer spans of respective left and right sides of the display 104. The configuration shown in Fig. 3A allows the user to select a touch zone anywhere along the lengths of the touch zones 302' and 304'.

Referring to Fig. 3B, in some embodiments, icons may be presented to allow the user to recognize the presence of the touch zones. Thus, an icon 312 may be displayed in a region of the display 104 to show where touch zone 302 is enabled. Similarly, an icon 314 may be displayed in a region of the display 104 to show where touch zone 304 is enabled. The icons 312 and 314 may be opaque and thus occlude portions of the underlying content. Alternatively, the icons 312 and 4 may be displayed with some degree of transparency to allow the underlying content to show through the icons.

A user may select a touch zone (e.g., right-side touch zone 304) by making a suitable tap gesture; e.g., a double tap, or simply by virtue of tapping one touch zone before the other. The application may remember the selected touch zone so that next time the application is started up, the application may offer the selected touch zone to the user as a "default" touch zone. Fig. 3C, for example, illustrates an example of the display 104 presenting a previously selected default touch zone. In some embodiments, the user may subsequently select a new default touch zone by making an appropriate tap gesture in the new touch zone; for example, the user may double tap the new touch zone. The application may respond by setting the new touch zone as the default touch zone.

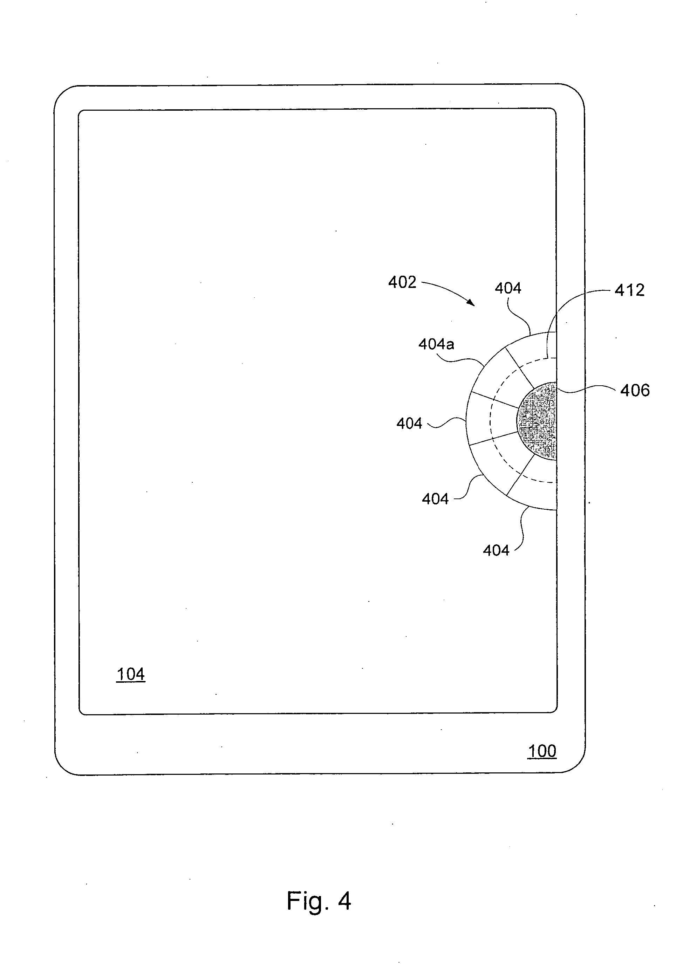

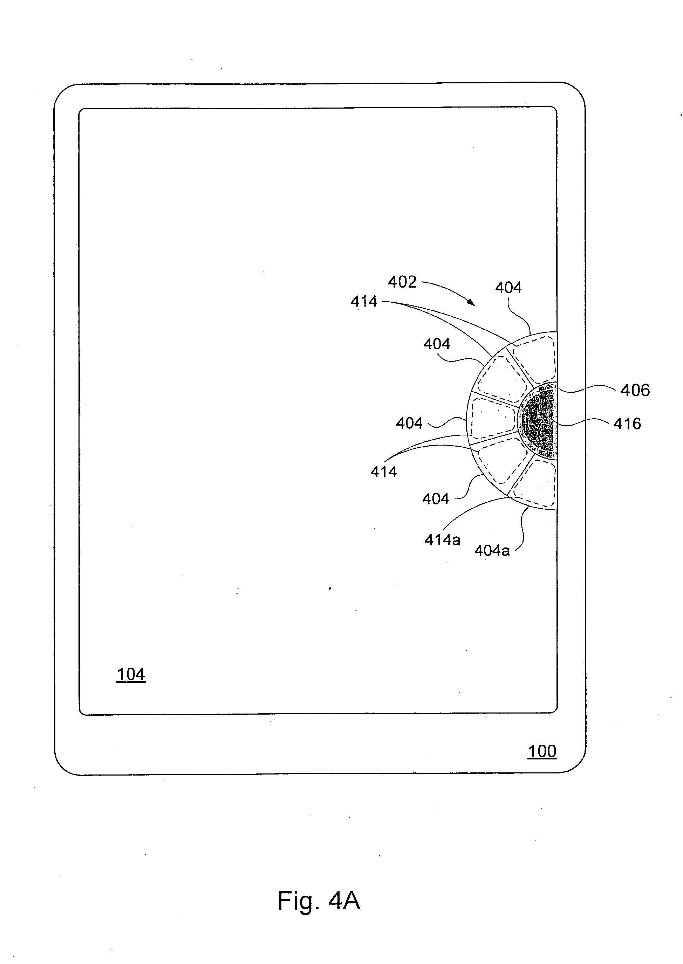

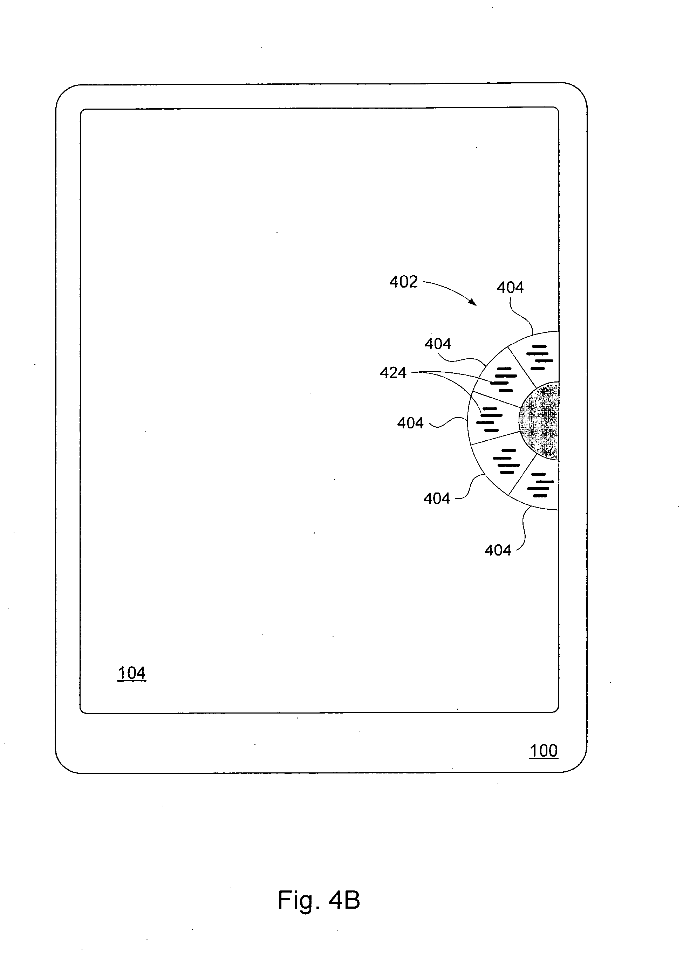

Referring to Fig. 4, after selecting the default touch zone (e.g., touch zone 304), a selection menu 402 may be rendered on the display 104 in the region of the default touch zone. In an embodiment, the selection menu 402 may comprise a plurality of pie-shaped menu buttons 404 presented on the display. In accordance with principles of the present disclosure, the menu buttons 404 may be displayed along an arcuate path. Fig. 4, for example, shows the menu buttons 404 arranged along a circular arc 412. Arranging the menu buttons 404 along an arcuate path allows the user to make selections with their thumb while grasping the portable electronic device 100 (see Fig. 1), thus requiring only one hand to both hold the device and navigate a user interface.

Referring to Fig. 4A, in some embodiments, each menu button 404 may have a corresponding menu item touch zone 414 that is defined in the same region as the menu button is displayed. When a user makes a suitable tap gesture (e.g., a single tap with their thumb) in a menu item touch zone (e.g., 414a), the application (e.g., 212, Fig. 2) may respond by displaying content that is associated with the corresponding menu button (i.e., 404b). Consider, for example, a browser application that has a "tab" feature for viewing multiple web sites. A selection menu 402 may be used to navigate the multiple web sites. Each menu button 404 may correspond to a web site, which the user can visit by tapping on the corresponding menu button. It will be appreciated that other applications may use the selection menu 402 in different ways. For example, rather than being associated with content that can be displayed, a menu button may be associated with an action that the application 212 may take, and may or may not involve the display of information.

Referring to Figs. 4 and 4A, in some embodiments, the selection menu 402 may include a home button 406, along with a corresponding touch zone 416. The home button 406 may used to return to a known web site in the case of browser for example. In a document reader, the home button 406 may be used to return to a specific page or location in the document; and so on. As will be explained in more detail below, the home button 406 may be used for menu navigation.

Referring to Fig. 4B, each menu button 404 may include some suitable graphic 424, such as text, an image, etc., to facilitate identifying the function or action associated with the menu button. When the user taps on a menu button 404, the associated graphic 424 may become occluded. Accordingly in some embodiments, as illustrated in Fig. 1 for example, the graphic may be repositioned. Fig. 1 shows the user's thumb is on menu button 106a. The associated graphic "Section 2", is shown being displaced from its initial location within the menu button.

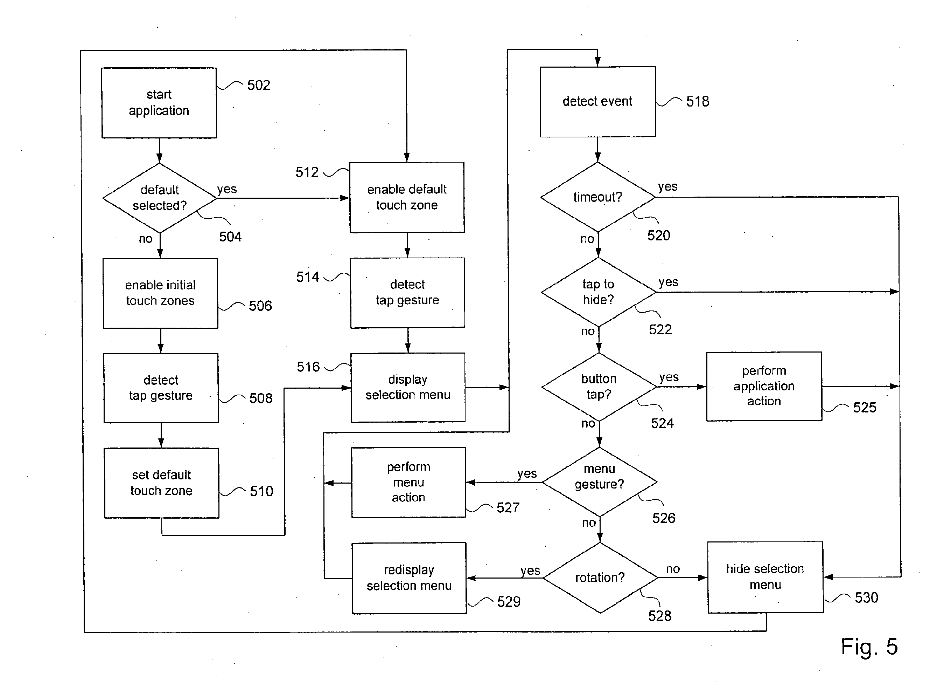

Fig. 5 illustrates an example of the process flow for an application (e.g., 212, Fig. 2) that provides menu navigation in accordance with embodiments of the present disclosure. The application starts up in step 502. If it is determined in a step 504, that a default touch zone had been previously selected, then processing may proceed to step 512, discussed below; otherwise processing proceeds to step 506 where the initial touch zones (e.g., 302, 304, Fig. 3B) are enabled along with icons (e.g., 312, 314) to indicate their presence to the user. When a suitable tap gesture in one of the initial touch zones 302, 304 has been detected, in step 508, then the application 212 may establish that touch zone as the default touch zone. Processing then proceeds to step 516, discussed below.

Returning to decision step 504, the YES branch is taken when a default touch zone (e.g., 304, Fig. 3C) had been previously selected. Accordingly, in a step 512, the application 212 enables the previously selected default touch zone 304, which may include displaying an icon 312 to visually indicate the presence of the touch zone. When a suitable tap gesture in the default touch zone 304 has been detected in step 514, then in step 516 a selection menu (e.g., 402, Fig. 4) is displayed in the vicinity of the default touch zone 304.

Subsequent processing depends on the actions of the user. Thus, in a step 518, the application 212 may detect the occurrence of an event resulting from the user interacting (or not interacting) with the touch-sensitive display 104. For example, one such event is simply a timeout event (step 520). In an embodiment, when the selection menu 402 is displayed, the application may initiate a timer (e.g., a ten second time). If the user does not make any gestures in the selection menu 402 within ten seconds after presentation of the selection menu, the application 212 may simply proceed to step 530 and hide the selection menu. Processing may then continue at step 512 to re-enable the default touch zone 304 and wait for another tap gesture to be made in the default touch zone.

If the event detected in step 518 is not a timeout event (i.e., NO branch from step 520), then we test if the event is an explicit tap gesture to hide the selection menu 402 (step 522). For example, a double tap made in any of the touch zones (e.g., 414, 416, Fig. 4A) associated with the selection menu 402 may constitute a command to hide the selection menu. The selection menu 402 may become hidden (step 530) and the application 212 may return to step 512 to re-enable the default touch zone 304 and wait for another tap gesture to be made in the default touch zone.

If the event detected in step 518 is not a hide menu event (i.e., NO branch from step 522), then we test if the event is a button tap (step 524) on one of the menu buttons (e.g., 404, Fig. 4) comprising the selection menu 402. If so, then processing of the event occurs in step 525. The specific action taken depends on the application 212. For example, the application 212 may display content that is associated with the menu button that was tapped (e.g., displaying a page in a document). The application 212 may perform some internal action that does not involve displaying content (e.g., setting a counter, setting a timer, sending a message, etc.). The application 212, however, may nonetheless present a visual (or aural) confirmation to indicate that the action was taken. After processing the button tap event in step 525, processing may proceed to step 530 where the selection menu 402 becomes hidden and the application 212 returns to step 512 to re-enable the default touch zone 304 and wait for another tap gesture to be made in the default touch zone.

If the event detected in step 518 is not a button tap event (i.e., NO branch from step 524), then we test if the event is a menu gesture (step 526). In some embodiments, the selection menu 402 may comprise more menu items than can be practically presented at once on the display 104. Accordingly, in some embodiments, the selection menu 402 may provide a menu hierarchy of sub-menus in order to display menu buttons for the additional menu items of the selection menu. In some embodiments, the selection menu 402 may be dynamic, being modeled as a wheel, a conveyer, or some other similar moveable object that can be manipulated (e.g., rotated, slid, etc.) to present the additional menu buttons. In other embodiments, the selection menu 402 may use a combination of both mechanisms to present additional menu buttons to the user. Illustrative examples will be discussed below to illustrate additional details of these aspects of the present disclosure.

The menu gesture event may be a button tap made on a menu button that navigates to a sub-menu instead of navigating to non-menu content (e.g., displaying a page on a document, displaying a web page, and so on). The menu gesture event may be a tap of the home button 406. As will be explained below, tapping on the home button 406 may take the user to a previous menu. The menu gesture event may be a "swipe" gesture. Referring for a moment to Fig. 1, an example of a swipe gesture using the thumb is illustrated. The application may define other gestures, in addition to or as alternatives to the foregoing menu gestures.

Continuing with step 526, the application 212 may respond to the swipe gesture in step 527 by animating the selection menu 402 to present additional menu buttons. This aspect of the present disclosure will be explained in more detail below. Processing may then continue at step 518, where a subsequent menu selection event may be detected for the newly presented menu buttons.

If the event detected in step 518 is not a menu gesture event (i.e., NO branch from step 526), then we test if the event was a rotation event. In some embodiments, the application 212 may detect whether the user is holding the portable electronic device 100 in "portrait" orientation or "landscape" orientation. When the device 100 is rotated from one orientation to the next, the selection menu 402 may be re-displayed (step 529) on the touchscreen display 104 to remain on the left side or the right side of the display. Processing may then continue at step 518, where a menu selection event may be detected for the re-positioned selection menu 402.

Completing the discussion of the flow chart shown in Fig. 5, if the event detected in step 518 is not a rotation event (i.e., NO branch from step 528), then it may be deemed the detected event does not relate to the selection menu 402. Accordingly, the application 212 may hide the selection menu 402 (step 530) and return to step 512 to re-enable the default touch zone 304 and wait for another tap gesture to be made in the default touch zone.

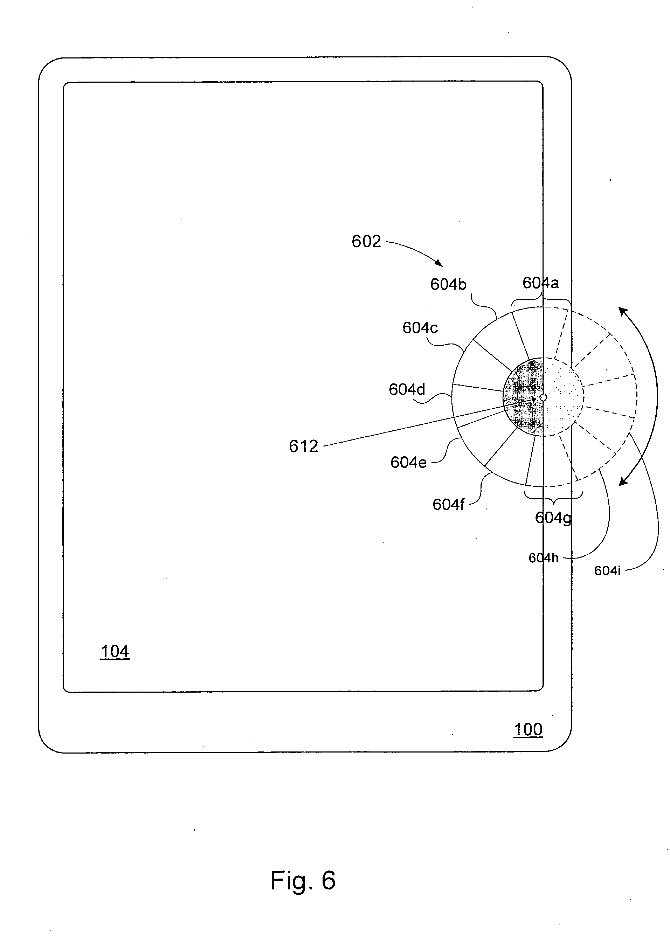

Refer now to Figs. 4 and 6. As mentioned above, the selection menu 402 in Fig. 4 may represent more menu items than can be practically displayed at one time. In some embodiments, the selection menu 402 may be represented as a dynamic element that can manipulated to display menu buttons to make other menu items available to the user. Referring to Fig. 6, for example, a selection menu 602 comprises menu buttons 604a-604g. Portions of menu buttons 604a and 604g are occluded by virtue of lying outside the display area. In response to an appropriate swipe gesture (e.g., such as shown in Fig. 1), an animation of the selection menu 402 may be rendered. For example, the figure illustrates that the selection menu 602 may be modeled as a wheel that can be spun about an axis 612. Depending on the direction of the detected swipe gesture, the selection menu 602 can be animated to rotate in the a clockwise or counterclockwise direction. As the selection menu 602 rotates (e.g., in the clockwise direction), the displayed menu buttons (e.g., 604a, 604b, 604c) will rotate out of view of the display 104, as occluded menu buttons (e.g., 604g, 604h, 604i) rotate into view on the display.

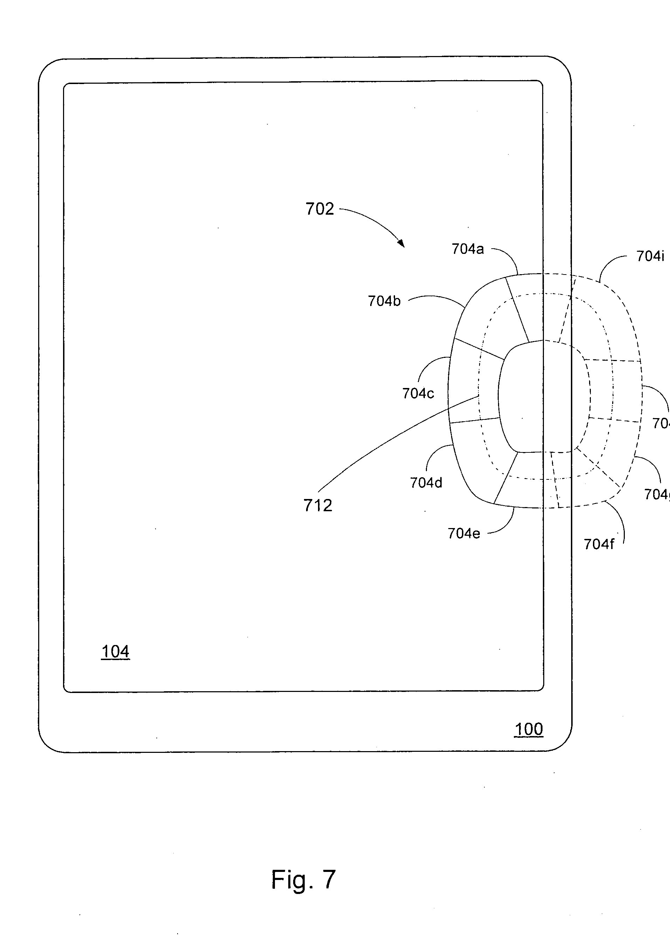

In accordance with principles of the present disclosure, the selection menu has an arcuate form. This form defines an arcuate path that broadly follows the same path that the user makes when they make a swiping gesture with their thumb as they grasp the portable electronic device 100. For example, the selection menu 402 shown in Fig. 4 has a semicircular shape, and may be modeled as a wheel that can be spun with a suitable swipe gesture as explained in connection with Fig. 6. In some embodiments, however, the selection menu may have any suitable arcuate form other than a semi-circle. Fig. 7 illustrates, merely as an example, a selection menu 702 having an exaggerated arbitrary arcuate shape. The menu buttons 704a-704i may be placed along an arcuate path 712. Menu buttons 704a and 704e are partially occluded and menu buttons 704f-704i are occluded by virtue of being outside of the display area of the touch-sensitive display 104. The selection menu 702 may be animated in response to a swipe gesture, for example, by moving the menu buttons 704a-704i along the arcuate path 712. The shapes of the menu buttons 704a-704i may be drawn differently depending on their location along the arcuate path 712 in order to render the effect of motion along the arcuate path. The direction of motion may be in a clockwise direction or a counterclockwise direction depending on the direction of the swipe gesture.

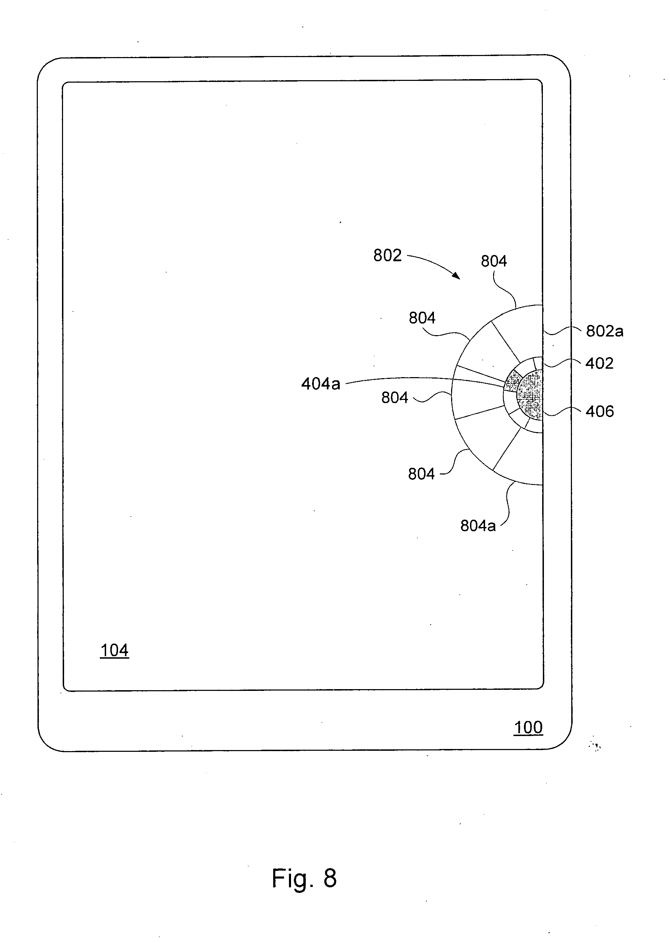

Refer now to Figs. 4 and 8. As mentioned above, the selection menu 402 shown in Fig. 4 may represent more menu items than can be practically displayed at one time. In some embodiments, a menu hierarchy of sub-menus may be provided. A menu button (e.g., 404a, Fig. 4) may be associated with a sub-menu. When an appropriate tap gesture is made on the menu button 404a, the selection menu 402 may be re-displayed to reveal the sub-menu associated with the menu button. Fig. 8 illustrates an example of a re-displayed selection menu 802. The selection menu 802 shows a sub-menu 802a that is revealed when its associated menu button 404a is tapped. In some embodiments, the original selection menu (402 in Fig. 4) may be retained in the display, though in reduced form as shown in the figure. Retaining the original selection menu 402 may provide the user some context as they navigate down a hierarchy of sub-menus. The tapped menu button 404a in the original selection menu 402 may be highlighted. By reducing the size of the original selection menu 402, the constituent menu items 804 of the sub-menu 802a can be more easily accessed.

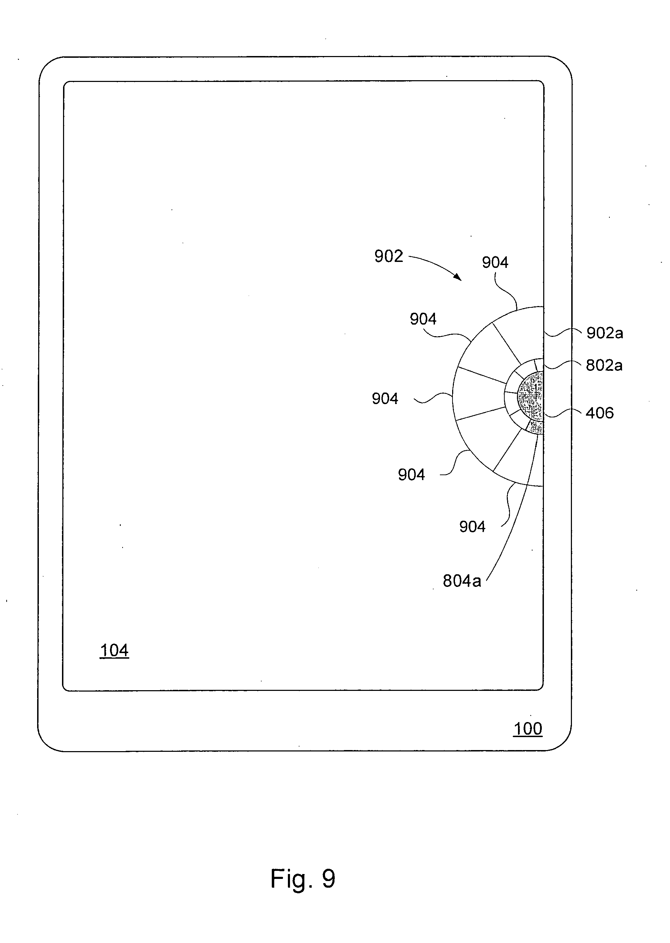

It will be appreciated that embodiments are not limited to a single level of sub-menus, and that additional levels of sub-menus may be provided. Referring again to Fig. 8, for example, a menu button 804a may be associated with a sub-menu. When an appropriate tap gesture is made on the menu button 804a, the selection menu 802 may be re-displayed to reveal the sub-menu associated with the menu button. Fig. 9 illustrates an example of a selection menu 902 when a second sub-menu 902a is rendered, showing the constituent menu buttons 904 of the second sub-menu. The sub-menu 802a is redisplayed and takes the place of the reduced display of the original selection menu 402 shown in Fig. 8. The tapped menu button 804a may be illustrated in the reduced display of sub-menu 802a. Additional sub-menus may be rendered in the same manner.

In some embodiments, the home button 406 (e.g., Fig. 9) may be used to go back to an upper level menu. A suitable tap gesture made on the home button 406 may bring the user up one level. Thus, for example, in Fig. 9, if the home button 406 is tapped, the user may be taken to the previous menu level (e.g., Fig. 8). Another tap on the home button 406 may again take the user to the previous menu level (e.g., Fig. 4). This "unwinding" of sub-menus may continue until the user reaches the highest level menu. When the user is at the highest menu level (e.g., Fig. 4), another tap on the home button 406 may cause the displayed selection menu 402 to be hidden.

The above description illustrates various embodiments of the present disclosure along with examples of how aspects of the present disclosure may be implemented. The above examples and embodiments should not be deemed to be the only embodiments, and are presented to illustrate the flexibility and advantages of the present disclosure as defined by the following claims. Based on the above disclosure and the following claims, other arrangements, embodiments, implementations and equivalents will be evident to those skilled in the art and may be employed without departing from the spirit and scope of the disclosure as defined by the claims.

### Advantages and Technical Effect

Embodiments of the present disclosure take into account that portable electronic devices can be held with one hand. Embodiments take into account that while holding the device on one side of the device, the thumb of the holding hand is still moveable, and can rotate about its joint over a portion of the touchscreen display (e.g., 104, Fig. 1). The disclosed embodiments contemplate a user interface built around this portion of the display for navigation with the thumb, allowing the user to hold the device and navigate with one hand.

## Claims

1. A computer-implemented method in a portable electronic device having a touch-sensitive display, the method comprising:
detecting a first tap gesture occurring in a first touch zone that is located on a left side of the display or a right side of the display;
responsive to detecting the first tap gesture, displaying a first selection menu comprising a first plurality of displayed menu buttons arranged along a curved path that is defined proximate the first touch zone, the menu buttons having corresponding menu item touch zones on the display; and
detecting an event, wherein:
if the event is a second tap gesture occurring in one of the menu item touch zones, then performing an action associated with the menu button that corresponds to the menu item touch zone; and
if the event is a second tap gesture occurring in the first touch zone, then hiding the first selection menu.

2. The method of claim 1 wherein performing an action associated with the menu button includes displaying content associated the menu button.

3. The method of claim 1 or 2 wherein performing an action associated with the menu button includes displaying a second selection menu that is associated with the menu button, the second selection menu comprising a second plurality of displayed menu buttons arranged along a perimeter of the first selection menu.

4. The method of claim 3 wherein at least one of the second plurality of displayed menu buttons is associated with a third selection menu, the method preferably further comprising detecting a second tap gesture in the first touch zone and in response thereto redisplaying a previous selection menu.

5. The method of claim 3 or 4 further comprising redisplaying the first selection menu with a smaller size.

6. The method of any one of the preceding claims wherein if the event is a swipe gesture, then displaying an animation of the first menu buttons moving along the curved path in a direction approximate to a direction of the swipe gesture, wherein one or more of the first menu buttons become hidden and one or more new menu buttons appear, whereby the first selection menu comprises a second plurality of displayed menu buttons different from the first plurality of displayed menu buttons.

7. The method of any one of the preceding claims further comprising detecting a change in orientation of the portable electronic device between a first orientation and a second orientation and in response thereto changing a location of the first touch zone in the first orientation of the display to a location on a left side or a right side of the display in the second orientation, preferably wherein the change in orientation is between a landscape orientation and a portrait orientation.

8. The method of any one of the preceding claims further comprising enabling a left-side touch zone and a right-side touch zone on the display and displaying a graphic in each of the left-side touch zone and the right-side touch zone.

9. The method of claim 8 wherein the graphics are transparent.

10. A portable electronic device comprising:
a processor;
a data store; and
a touch-sensitive display,
the data store having stored thereon computer executable program code which, when executed by the processor, causes the processor to:
detect a first tap gesture occurring in a first touch zone that is located on a left side of the display or a right side of the display;
responsive to detecting the first tap gesture, display a first selection menu comprising a first plurality of displayed menu buttons arranged along a curved path that is defined proximate the first touch zone, the menu buttons having corresponding menu item touch zones on the display; and
detect an event, wherein:
if the event is a second tap gesture occurring in one of the menu item touch zones, then perform an action associated with the menu button that corresponds to the menu item touch zone; and
if the event is a second tap gesture occurring in the first touch zone, then hide the first selection menu.

11. The portable electronic device of claim 10 wherein the action associated with the menu button includes displaying content associated with the menu button.

12. The portable electronic device of claim 10 or 11 wherein the action associated with the menu button includes displaying a second selection menu that is associated with the menu button, the second selection menu comprising a second plurality of displayed menu buttons arranged along a perimeter of the first selection menu.

13. The portable electronic device of any one of claims 10 to 12 wherein if the event is a swipe gesture, then displaying an animation of the first menu buttons moving along the curved path in a direction approximate to a direction of the swipe gesture, wherein one or more of the first menu buttons become hidden and one or more new menu buttons appear, whereby the first selection menu comprises a second plurality of displayed menu buttons different from the first plurality of displayed menu buttons.

14. The portable electronic device of any one of claims 10 to 13 wherein execution of the computer executable program code further causes the processor to enable a left-side touch zone and a right-side touch zone on the display and display a graphic in each of the left-side touch zone and the right-side touch zone.

15. A non-transitory computer readable storage medium having stored thereon computer executable program code which, when executed by the processor, causes the processor to perform a method according to any one of claims 1 to 9.
